# EUROPÄISCHE PATENTANMELDUNG

(11) **EP 1 104 649 A1**
(43) Veröffentlichungstag der Anmeldung: **06.06.2001**
(21) Anmeldenummer: 00125965.4
(22) Anmeldetag: 28.11.2000
(51) Int. Cl.: A21C 7/01

(54) **Langroller mit Druckbrett-Einheit**

(30) Priorität: 03.12.1999 DE 29921323 U
(71) Anmelder: Werner & Pfleiderer Lebensmitteltechnik GmbH, 91550 Dinkelsbühl (DE)
(72) Erfinder: Meier, Alexander, 91602 Dürrwangen (DE)
(74) Vertreter: Rau, Manfred, Dr. Dipl.-Ing.

(57) **Zusammenfassung**

Ein Langroller zum Langrollen von Teigstücken weist ein Grundgestell (8), eine Abstützung in Form einer Platte (9) und ein im Grundgestell (8) gelagertes, mit einem Obertrum (15) über die Platte (9) geführtes, endloses Unterband (10) auf. Außerdem ist eine Druckbrett-Einheit (39) vorgesehen, die mindestens ein lös- und auswechselbares Druckbrett (44) aufweist.

## Beschreibung

Die Erfindung betrifft einen Langroller mit einer Druckbrett-Einheit.

Der Erfindung liegt die Aufgabe zugrunde, einen Langroller mit Druckbrett-Einheit so auszugestalten, daß sehr einfach unterschiedliche Druckbretter eingesetzt werden können, und sehr leicht eine Anpassung eines Langrollers an die Zahl der parallel langzurollenden Teigstücke möglich ist.

Diese Aufgabe wird erfindungsgemäß durch die Merkmale des Anspruches 1 gelöst. Dadurch, daß die eigentlichen Druckbretter lös- und auswechselbar an der Druckbrett-Einheit angebracht sind, können sie sehr einfach ausgetauscht werden. Sie können aber auch ohne jede Anpassungsmaßnahme bei Langrollern eingesetzt werden, die für unterschiedliche Zahlen von nebeneinander zu behandelnden Teigstücken ausgelegt sind. Es können also zwei oder auch fünf derartiger gleicher Druckbretter nebeneinander eingesetzt werden. Die Unteransprüche geben insbesondere die weiteren Ausgestaltungen in dem vorstehend angesprochenen Rahmen wieder.

Weitere Merkmale, Vorteile und Einzelheiten der Erfindung ergeben sich aus der nachfolgenden Beschreibung anhand der Zeichnung. Es zeigt:
- Fig. 1: eine Rollgebäckanlage mit einem Langroller in schematischer Darstellung,
- Fig. 2: eine Seitenansicht eines Langrollers gemäß der Erfindung,
- Fig. 3: eine Draufsicht auf eine Druckbrett-Einheit nach der Erfindung, und
- Fig. 4: einen Querschnitt durch die Druckbrett-Einheit entsprechend der Schnittlinie IV-IV in Fig. 3.

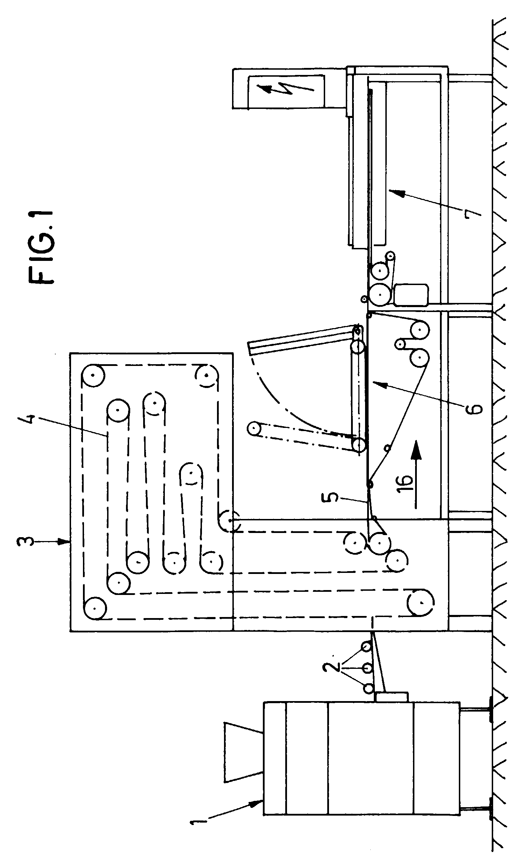

Die in Fig. 1 dargestellte Rollgebäck-Anlage weist eine Teigteil- und Rundwirk-Maschine 1 auf, in der in üblicher Weise Teigstücke 2 abgeteilt und in bekannter Weise rundgewirkt werden. Diese Teigstücke 2 werden einem Gärschrank 3 zugeführt, in dem sie in im einzelnen nicht dargestellten Gehängen an endlos umlaufenden Ketten 4 umlaufen und einem Gärprozeß unterworfen werden. Mittels eines Abtransportbandes 5 des Gärschrankes 3 werden die Teigstücke 2 einem Langroller 6 übergeben, von wo aus sie dann auf eine Ablege-Vorrichtung 7 gelangen. Dieser Grundaufbau einer Rollgebäck-Anlage ist üblich und bekannt, soweit es sich nicht um den Aufbau des Langrollers handelt.

Der Langroller 6 weist ein Grundgestell 8 auf, das an seiner Oberseite mit einer tischartigen, ebenen Platte versehen ist. Auf dieser Platte 9 ist ein endloses Unterband 10 abgestützt, das über im unteren Bereich des Grundgestells 8 gelagerte Antriebsrollen 11 geführt ist, die von einem Antriebsmotor 12 über einen Riementrieb angetrieben werden. Zwischen den Antriebsrollen 11 ist eine Band-Spanneinrichtung 14 vorgesehen. Der Antrieb des Unterbandes 10 erfolgt so, daß das auf der Platte 9 aufliegende Obertrum 15 in Transportrichtung 16 der Teigstücke 2 bewegt wird.

Oberhalb der Platte 9 ist ein rahmenartiges Traggestell 17 angeordnet, das über Höhen-Verstell-Vorrichtungen 18 in der Höhe relativ zur Platte 9 verstellbar ist. Diese Höhen-Verstell-Vorrichtungen 18 weisen je ein Handrad 19 mit einer Gewindespindel 20 auf, mittels derer der Abstand des Traggestells 17 von der Platte 9 bzw. dem Obertrum 15 des Unterbandes 10 stufenlos fein eingestellt werden kann. Mit den Gewinde-Spindeln 20 gekoppelt ist jeweils ein pneumatisch oder hydraulisch beaufschlagbarer Kolben-Zylinder-Antrieb 21 als Linearantrieb, mittels derer das Traggestell 17 aus einer unteren Arbeitsposition in eine obere Ruhe- bzw. Abhebe-Position verschoben werden kann. Alternativ kann auch ein elektrischer Antrieb vorgesehen sein.

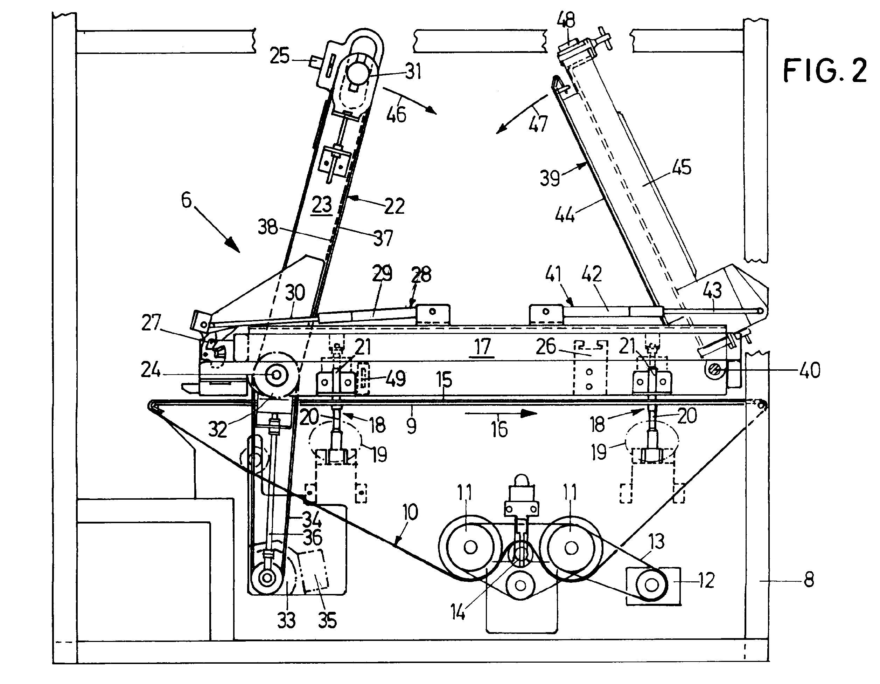

Am Traggestell 17 ist ein Oberband 22 angebracht, das in einem Schwenkrahmen 23 geführt und gelagert ist. Der Schwenkrahmen 23 ist um eine horizontale, quer zur Transportrichtung 16 verlaufende Schwenkachse 24 im Traggestell 17 schwenkbar gelagert und kann zwischen einer - in Fig. 2 dargestellten - hochgeschwenkten Ruhelage und einer horizontalen Arbeitsposition verschwenkt werden, in der der Schwenkrahmen 23 und damit auch das Oberband 22 relativ zum Traggestell 17 und damit auch relativ zum Obertrum 15 des Unterbandes 10 positioniert sind. In dieser Arbeitsposition wird das freie Ende des Schwenkrahmens 23 mittels eines Riegels 25 mit dem Traggestell 17 verriegelt, der in eine am Traggestell 17 angebrachte Riegelaufnahme eingreift. In der in Fig. 2 dargestellten hochgeschwenkten Stellung des Schwenkrahmens 23 mit Oberband 22 ist der Schwenkrahmen 23 mittels einer Klinken-Verriegelung 27 mit dem Traggestell 17 verriegelt, also gesichert. Das Hochschwenken des Schwenkrahmens 23 mit Oberband 22 wird mittels eines durch eine Gasfeder 28 gebildeten Kraftspeichers erleichtert, der die zu bewegenden Massen im wesentlichen kompensiert. Hierzu sind der Zylinder 29 der Gasfeder 28 am Traggestell 17 und Kolbenstange 30 der Gasfeder 28 am Schwenkrahmen 23 angelenkt.

Das Oberband 22 ist um eine am freien Ende des Schwenkrahmens 23 befindlichen Umlenkrolle 31 und eine konzentrisch zur Schwenkachse 24 angeordnete Antriebsrolle 32 geführt. Diese wiederum wird von einem im Grundgestell 8 angeordneten Antriebsmotor 33 über einen Riementrieb 34 angetrieben. Damit der Antriebsmotor 33 die bereits angesprochenen Höhenbewegungen des Schwenkrahmens 23 mit Oberband 22 mitmachen kann, ist er über eine Wippe 35 gelagert und über eine längeneinstellbare Zugstange 36 mit dem Traggestell 17 verbunden.

Das Untertrum 37 des Oberbandes 22 stützt sich gegen eine am Schwenkrahmen 23 angebrachte Druckplatte 38 ab, kann also von oben Druck auf die Teigstücke 2 ausüben; es wird daher in der Praxis auch als Druckband bezeichnet. Bei in die horizontale Arbeitsstellung geschwenktem Schwenkrahmen begrenzt das Obertrum 15 des Unterbandes 10 und das Untertrum 37 des Oberbandes 22 einen Kanal, in dem aufgrund von Relativgeschwindigkeiten von Unterband 10 und Oberband 22 gegeneinander die Teigstükke 2 langgerollt werden. Die Antriebsmotoren 12 und 33 sind drehzahlregelbar und drehrichtungsumkehrbar, so daß der Langroll-Prozeß genau gesteuert werden kann. Dieser Kanal kann in seiner Höhe durch die Handräder 19 mit Gewinde-Spindeln der Höhen-Verstell-Vorrichtungen 18 genau eingestellt werden. Wenn kein Langrollen erfolgen soll, wird das Traggestell 17 mittels der Antriebe 21 nach oben verfahren. Wie aus Fig. 2 ableitbar ist, erstreckt sich das Oberband 22 in der heruntergeschwenkten Arbeitsposition über mehr als Dreiviertel des Obertrums 15 des Unterbandes 10.

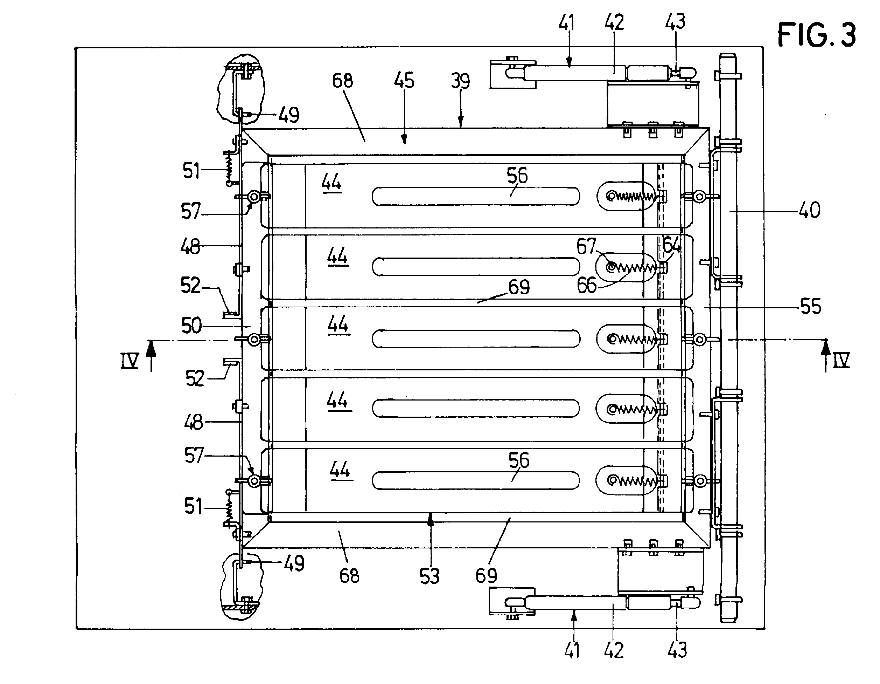

In Transportrichtung 16 unmittelbar hinter der Riegelaufnahme 26 ist eine Druckbrett-Einheit 39 um eine Schwenkachse 40 schwenkbar am Traggestell 17 angelenkt, wobei auch hier die Schwenkachse 40 horizontal und quer zur Transportrichtung 16 verläuft. Die Druckbrett-Einheit 39 ist - wie Fig. 2 entnehmbar ist - in den Bereich einschwenkbar, in den auch das Oberband 22 einschwenkbar ist. Das Oberband 22 und die Druckbrett-Einheit 39 haben also einen sich weitgehend überdeckenden Arbeitsbereich, können also selbstverständlich nur abwechselnd eingesetzt werden. Auch die Druckbrett-Einheit 39 ist mittels eines durch eine Gasfeder 41 gebildeten Kraftspeichers gegenüber dem Traggestell 17 in der Weise abgestützt, daß ihre Gewichtskraft im wesentlichen kompensiert wird. Hierzu ist auch der Zylinder 42 der Gasfeder 41 am Traggestell 17 angelenkt, während die Kolbenstange 43 mit einem mindestens ein Druckbrett 44 tragenden Schwenkrahmen 45 als Druckbrett-Einheit 39 gelenkig verbunden ist. Der Schwenkrahmen 45 ist um die Schwenkachse 40 verschwenkbar gelagert. Das Oberband 22 wird also entsprechend dem Schwenkrichtungspfeil 46-im Uhrzeigersinn - in seine horizontale Arbeitsstellung verschwenkt, während die Druckbrett-Einheit 39 entsprechend dem Schwenkrichtungspfeil 47 in entgegengesetzter Richtung in ihre Arbeitsposition verschwenkt wird. In seiner horizontalen Arbeitsstellung ist der Abstand des Druckbrettes 44 vom Obertrum 15 des Unterbandes 10 in gleicher Weise einstellbar wie der des Oberbandes 22. In der Arbeitsposition wird die Druckbrett-Einheit 39 mit dem Traggestell 17 verriegelt. Hierzu sind am Schwenkrahmen 44 Riegel 48 angebracht, die in am Traggestell 17 ausgebildete Riegelaufnahmen 49 lösbar eingreifen können. Wie Fig. 3 entnehmbar ist, sind zwei Riegel 48 vorgesehen, die an einem der Schwenkachse 40 entgegengesetzten Holm 50 des Schwenkrahmens 45 in dessen Längsrichtung verschiebbar angebracht sind. Sie sind jeweils mit einer vorgespannten Zugfeder 51 belastet, die den jeweiligen Riegel 48 in seiner nach außen ausgefahrenen, in die Riegelaufnahme 49 eingreifenden Position hält. Eine Entriegelung erfolgt durch Krafteinwirkung auf einen Bedienungsgriff 52 jedes Riegels, wobei der Riegel 48 gegen die Kraft der Zugfeder 51 in Richtung zum anderen Riegel 48 hin verschoben wird.

Wie weiterhin Fig. 3 entnehmbar ist, weist die Druckbrett-Einheit 39 im vorliegenden Fall insgesamt fünf Druckbretter 44 auf. Jedes Druckbrett 44 ist an der Unterseite einer Tragplatte 53 angebracht, die an ihren Enden nach oben abgekröpfte Auflage-Abschnitte 54 aufweist, die auf den Holm 50 und den diesem gegenüberliegenden, der Schwenkachse 40 benachbarten Holm 55 des Schwenkrahmens 45 auflegbar sind. An der Oberseite der Tragplatte 53 ist ein bügelartiger Handgriff 56 angebracht. In den Holmen 50, 55 sind Klemm-Einrichtungen 57 vorgesehen, mittels derer die Auflage-Abschnitte 54 jeder Tragplatte 53 auf den Holmen 50, 55 des Schwenkrahmens 45 festgeklemmt werden können. Durch einfaches Drehen der Klemm-Einrichtung 57 wird die Klemmung hergestellt oder wieder gelöst. Die Klemm-Einrichtungen 57 weisen einen Gewindebolzen 58 mit einem Knebelgriff 59 auf. Der Gewindebolzen 58 ist in eine Gewindebuchse 60 im Holm 50 eingedreht. Am Übergang vom Gewindebolzen 58 zum Knebelgriff 59 ist ein Anschlag 61 ausgebildet, der von oben gegen den entsprechenden Auflage-Abschnitt 54 anliegt.

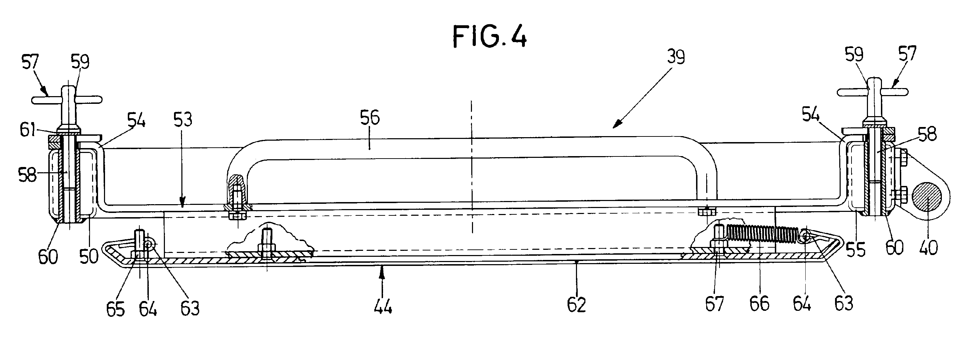

Die Druckbretter 44 sind an ihrer Unterseite mit einem auswechselbaren Belag 62 aus Filz versehen. Dieser Belag ist im Bereich seiner beiden Enden mit einem Hohlsaum 63 versehen, durch den jeweils Haltestangen 64 geschoben sind. An einem - in Fig. 4 linken - Ende ist die Haltestange 64 hinter an der Oberseite des Druckbrettes 44 angebrachte Haltestifte 65 gehängt. Am anderen - in Fig. 4 rechten - Ende ist an der Haltestange 64 eine Spannfeder 66 angebracht, die auf einen Haltestift 67 gehängt ist, der ebenfalls an der Oberseite des Druckbrettes 44 angebracht ist. Durch Abheben der Spannfeder 66 von dem Haltestift 67 kann der Belag 62 leicht abgenommen und ausgewechselt werden.

Die Druckbrett-Einheit 39 ist selbstverständlich nicht nur in der geschilderten Kombination mit einem Oberband einsetzbar, sondern bei jedem ansonsten üblichen Langroller, der eine Druckbrett-Einheit aufweist.

Unter den einzelnen Druckbrettern 44 werden nebeneinander und parallel zueinander Teigstücke 2 langgerollt.

Hierzu werden zwischen einander benachbarten Druckbrettern 44 und zwischen den jeweils außen liegenden Druckbrettern 44 und den benachbarten Längs-Holmen 68 des Schwenkrahmens 45 Seiten-Führungsleisten 69 eingesetzt, die auf dem Unterband 10 aufliegen und in ihrer Position durch die Schwerkraft gehalten werden. Durch den seitlichen Abstand zweier benachbarter Seiten-Führungsleisten 69 wird die Länge des unter dem jeweiligen Druckbrett 44 langgerollten Teigstückes 2 festgelegt.

Die einzelnen Druckbretter 44 können unterschiedliche Breite aufweisen. Entsprechend weisen dann die Seiten-Führungsleisten 69 unterschiedliche Breite auf, so daß nicht nur durch einen einfachen Umbau eine Umstellung auf unterschiedliche Teigstücke möglich ist. Es können auch gleichzeitig nebeneinander unterschiedliche Teigstücke, insbesondere unterschiedlich lange Teigstücke, langgerollt werden.

## Patentansprüche

1. Langroller zum Langrollen von Teigstücken (2),
- mit einem Grundgestell (8),
- mit einer Abstützung (Platte 9),
- mit einem im Grundgestell (8) gelagerten, mit einem Obertrum (15) über die Abstützung (Platte 9) geführten, endlosen Unterband (10), und
- mit einer Druckbrett-Einheit (39), die mindestens ein lös- und auswechselbares Druckbrett (44) aufweist.

2. Langroller nach Anspruch 1, **dadurch gekennzeichnet**,
daß die Druckbrett-Einheit (39) zwei voneinander beabstandete und zueinander parallele Holme (50, 55) aufweist, an denen das mindestens eine Druckbrett (44) befestigt ist.

3. Langroller nach Anspruch 2, **dadurch gekennzeichnet**,
daß mindestens ein Holm (50, 55) mit einer Klemm-Einrichtung (57) zur lösbaren Befestigung eines Druckbrettes (44) versehen ist.

4. Langroller nach einem der Ansprüche 1 bis 3, **dadurch gekennzeichnet**,
daß das mindestens eine Druckbrett (44) an der Unterseite einer Tragplatte (53) angebracht ist, die lös- und auswechselbar befestigt wird.

5. Langroller nach Anspruch 4, **dadurch gekennzeichnet**,
daß die Tragplatte (53) Auflage-Abschnitte (54) aufweist, die auf die Holme (50, 55) auflegbar sind.

6. Langroller nach Anspruch 5, **dadurch gekennzeichnet**,
daß die Auflage-Abschnitte (54) mittels der Klemm-Einrichtung (57) auf den Holmen (50, 55) fest klemmbar sind.

7. Langroller nach Anspruch 2, **dadurch gekennzeichnet**,
daß die Holme (50, 55) Teile eines Rahmens (45) sind, der gegenüber der Abstützung (Platte 9) höhenveränderbar ist.

8. Langroller nach Anspruch 7, **dadurch gekennzeichnet**,
daß der Rahmen als um eine Schwenkachse (40) hochschwenkbarer Schwenkrahmen (45) ausgebildet ist.

9. Langroller nach einem der Ansprüche 1 bis 8, **dadurch gekennzeichnet**,
daß nebeneinander mehrere Druckbretter (44) vorgesehen sind.

10. Langroller nach einem der Ansprüche 1 bis 9, **dadurch gekennzeich**net,
daß mehrere unterschiedlich breite Druckbretter (44) vorgesehen sind.

11. Langroller nach einem der Ansprüche 1 bis 10, **dadurch gekennzeich**net,
daß zwischen einander benachbarten Druckbrettern (44) und zwischen Druckbrettern (44) und Längs-Holmen (68) die jeweiligen Zwischenräume zumindest im wesentlichen ausfüllende Seiten-Führungsleisten (69) vorgesehen sind.

12. Langroller nach Anspruch 11, **dadurch gekennzeichnet**,
daß die Seiten-Führungsleisten (69) lose auf dem Unterband (10) aufliegen.
